# EUROPEAN PATENT APPLICATION

(11) **EP 4 769 723 A1**
(43) Date of publication of application: **01.07.2026**
(21) Application number: 25861228.2
(22) Date of filing: 12.08.2025
(51) Int. Cl.: H01M 50/242, H01M 50/383, H01M 50/249

(54) **BATTERY PACK**

(30) Priority: 26.08.2024 KR 20240114180
(71) Applicant: LG ENERGY SOLUTION, LTD., Seoul 07335 (KR)
(72) Inventor: The designation of the inventor has not yet been filed
(74) Representative: Plasseraud IP
(86) International application number: PCT/KR2025/012206
(87) International publication number: WO 2026/049367

(57) **Abstract**

Disclosed is a battery pack. The battery pack include a case providing a space therein; a battery cell located inside the case; and an air bag provided on an outer surface of the case and configured to communicate with the inner space of the case.

## Description

### TECHNICAL FIELD

The present disclosure relates to a battery pack.

The present application claims priority to Korean Patent Application No. 10-2024-0114180 filed on August 26, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, if impacts are applied to the battery module or the battery pack, the risk of thermal events may increase. Furthermore, if impacts are to the vehicle in which the battery module or the battery pack is installed, the battery module or the battery pack may collide with other internal structures. At this time, a structure is needed to protect the battery module or the battery pack from external impacts.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

Therefore, the present disclosure is designed to solve the problems of the related art, and therefore the present disclosure is directed to providing a battery pack having a structure capable of alleviating or absorbing impact applied to the battery pack, and a vehicle including the same.

In addition, the present disclosure is directed to providing a structure that facilitates expansion of the inner space of the battery pack when a thermal event occurs.

In addition, the present disclosure is directed to providing a structure that may suppress the propagation of a thermal event when the thermal event occurs.

In addition, the present disclosure is directed to providing a structure that may quickly extinguish a fire in a battery pack when a thermal event occurs.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a case providing a space therein; a battery cell located inside the case; and an air bag provided on an outer surface of the case and configured to communicate with the inner space of the case.

In addition, the battery pack may further comprise a tubing coupled to an outer surface of the case and configured to communicate with the inner space of the case.

In addition, the case may include a base plate; and a side wall installed on an upper surface of the base plate, and the air bag may be provided on the side wall.

In addition, the air bag may be provided in plurality, and the plurality of air bags may be arranged along a perimeter of the case.

In addition, the tubing may be coupled to the side wall.

In addition, the tubing may be configured to supply gas into the case.

In addition, the air bag may be configured to expand as gas is supplied into the case.

In another aspect of the present disclosure, there is also provided a vehicle, comprising the battery pack according to the present disclosure.

In addition, the vehicle may further comprise a gas supply unit configured to supply gas, and the tubing may communicate with the gas supply unit.

### Advantageous Effects

According to at least one of the embodiments of the present disclosure, the impacts applied to the battery pack may be alleviated.

According to at least one of the embodiments of the present disclosure, thermal event propagation of a battery pack may be suppressed.

According to at least one of the embodiments of the present disclosure, a fire in a battery pack may be quickly extinguished.

According to at least one of the embodiments of the present disclosure, the electrical safety of the battery pack may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack of FIG. 1.
FIG. 3 is an exploded view showing some components of the battery pack of FIG. 2.
FIG. 4 is a drawing showing the battery module of FIG. 2.
FIG. 5 is an exploded view showing some components of the battery module of FIG. 4.
FIG. 6 is a cross-sectional view taken along the line A-A' of FIG. 1.
FIG. 7 is a cross-sectional view taken along the line B-B' of FIG. 1.
FIG. 8 is a diagram showing the change in FIG. 7 when gas is supplied.
FIG. 9 is a diagram showing the change in FIG. 1 when gas is supplied.
FIG. 10 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

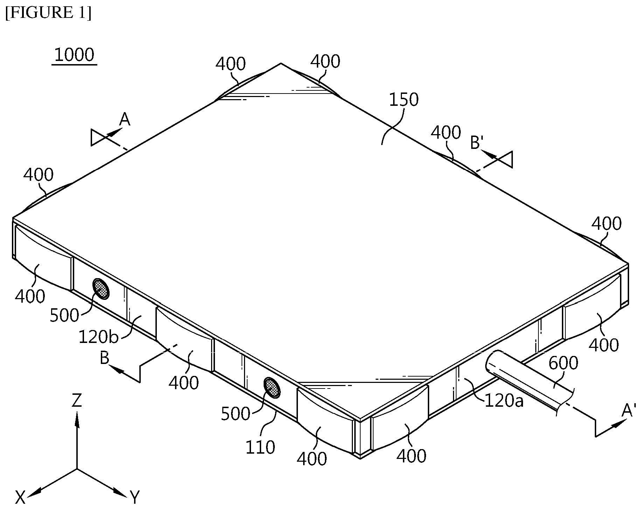

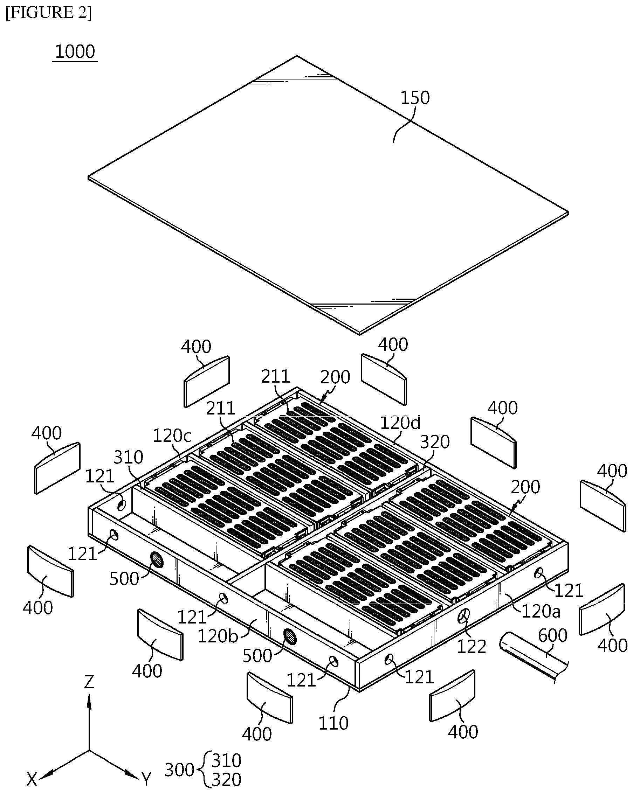

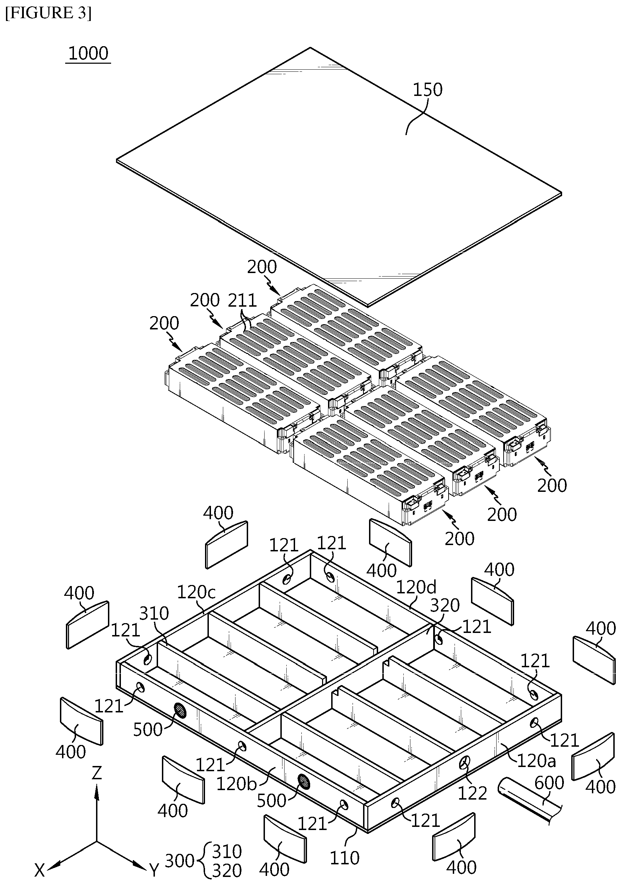

FIG. 1 is a diagram showing a battery pack 1000 according to an embodiment of the present disclosure. FIG. 2 is an exploded view showing some components of the battery pack 1000 of FIG. 1. FIG. 3 is an exploded view showing some components of the battery pack 1000 of FIG. 2.

Referring to FIGS. 1 to 3, the battery pack 1000 may include a case 100. The case 100 may provide a space therein. The case 100 may form the outer appearance of the battery pack 1000.

The battery cell 220 may be located inside the case 100. The battery cell 220 may refer to a secondary battery. In particular, the battery cell 220 may be a pouch-type secondary battery. However, the shape of the battery cell 220 is not limited to a pouch shape, and may have various shapes such as a cylindrical shape or a rectangular parallelepiped shape. The battery cell 220 may be provided in plurality.

The air bag 400 may be provided on the outer surface of the case 100. The air bag 400 may be installed, fastened, coupled, attached, or fixed to the case 100. The air bag 400 may be communicated with the inner space of the case 100. When gas G is supplied into the case 100 or the pressure inside the case 100 increases, the air bag 400 may expand. The air bag 400 may contain a flexible material. The air bag 400 may contain an elastic material. For example, the air bag 400 may contain a polyester material. The air bag 400 may contain an expandable or contractible material.

If an impact is applied to the battery pack 1000 or the battery pack 1000 collides with another part, the battery pack 1000 may be damaged. The air bag 400 may alleviate the impact applied to the battery pack 1000.

Referring to FIGS. 1 to 3, the case 100 may include a base plate 110. The base plate 110 may have a square shape. The base plate 110 may have a flat plate shape. The base plate 110 may form the outer appearance of the battery pack 1000. The base plate 110 may provide an inner space of the battery pack 1000.

The case 100 may include a first side wall 120a. The first side wall 120a may be installed, fastened, coupled, attached, or fixed to the upper surface of the base plate 110. The first side wall 120a may extend along a right edge of the base plate 110. The first side wall 120a may form the outer appearance of the battery pack 1000. The first side wall 120a may have a first supply hole 121. The first supply hole 121 may communicate the inside of the case 100 with the outside. The first side wall 120a may have a plurality of first supply holes 121. An air bag 400 may be installed, fastened, coupled, attached, or fixed to the first supply hole 121. The air bag 400 may be installed, fastened, coupled, attached, or fixed to an outer surface of the first side wall 120a. The first side wall 120a may include a plurality of air bags 400.

The case 100 may include a second side wall 120b. The second side wall 120b may be installed, fastened, coupled, attached, or fixed to the upper surface of the base plate 110. The second side wall 120b may extend along a front edge of the base plate 110. The second side wall 120b may form the outer appearance of the battery pack 1000. The second side wall 120b may have a first supply hole 121. The second side wall 120b may have a plurality of first supply holes 121. An air bag 400 may be installed, fastened, coupled, attached, or fixed to the first supply hole 121. The air bag 400 may be installed, fastened, coupled, attached, or fixed to an outer surface of the second side wall 120b. The second side wall 120b may include a plurality of air bags 400.

The case 100 may include a third side wall 120c. The third side wall 120c may be installed, fastened, coupled, attached, or fixed to the upper surface of the base plate 110. The third side wall 120c may extend along a left edge of the base plate 110. The third side wall 120c may form the outer appearance of the battery pack 1000. The third side wall 120c may have a first supply hole 121. The third side wall 120c may have a plurality of first supply holes 121. An air bag 400 may be installed, fastened, coupled, attached, or fixed to the first supply hole 121. The air bag 400 may be installed, fastened, coupled, attached, or fixed to an outer surface of the third side wall 120c. The third side wall 120c may include a plurality of air bags 400.

The case 100 may include a fourth side wall 120d. The fourth side wall 120d may be installed, fastened, coupled, attached, or fixed to the upper surface of the base plate 110. The fourth side wall 120d may extend along a rear edge of the base plate 110. The fourth side wall 120d may form the outer appearance of the battery pack 1000. The fourth side wall 120d may have a first supply hole 121. The fourth side wall 120d may have a plurality of first supply holes 121. An air bag 400 may be installed, fastened, coupled, attached, or fixed to the first supply hole 121. The air bag 400 may be installed, fastened, coupled, attached, or fixed to an outer surface of the fourth side wall 120d. The fourth side wall 120d may include a plurality of air bags 400.

The first side wall 120a, the second side wall 120b, the third side wall 120c, and the fourth side wall 120d may be arranged along the perimeter of the base plate 110. The plurality of air bags 400 may be arranged along the side walls 120a, 120b, 120c, 120d. The plurality of air bags 400 may be arranged along the perimeter of the base plate 110. The plurality of air bags 400 may be arranged along the perimeter of the case 100.

The case 100 may include a pack cover 150. The pack cover 150 may have a square plate shape. The pack cover 150 may have a flat plate shape. The pack cover 150 may form the outer appearance of the battery pack 1000. The pack cover 150 may cover the inner space of the battery pack 1000.

The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the inner space of the battery pack 1000. The battery cell 220 may be located in the space partitioned by the partition wall 300.

The case 100 may include a venting device 500. The venting device 500 may be installed on the second side wall 120b. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

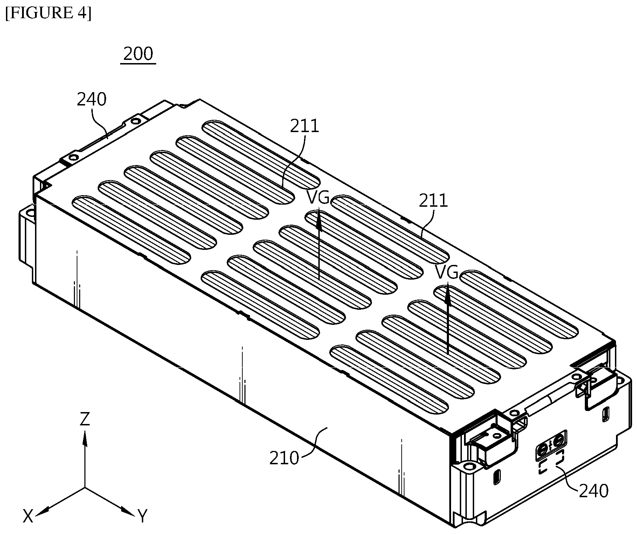

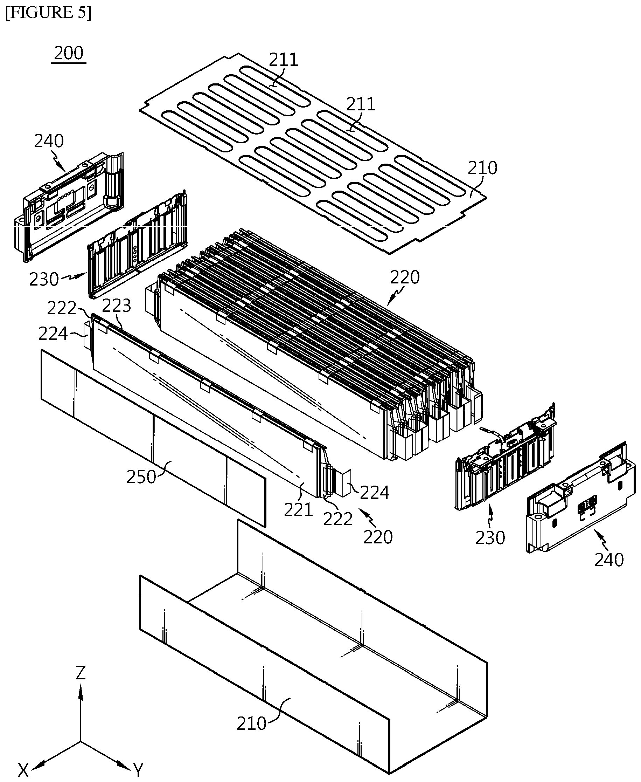

FIG. 4 is a drawing showing the battery module 200 of FIG. 2. FIG. 5 is an exploded view showing some components of the battery module 200 of FIG. 4. Referring to FIGS. 4 and 5, the battery module 200 may be positioned in the space partitioned by the partition wall 300. In addition, the partition wall 300 may face at least one side of the battery module 200. The battery module 200 may be provided in plurality.

The battery module 200 may include a module case 210. The module case 210 may have a rectangular parallelepiped shape. The module case 210 may also be referred to as a frame 210. The module case 210 may provide a space therein. The module case 210 may include a top plate, a bottom plate, and a pair of side plates. In addition, the module case 210 may have front and rear surfaces opened. The module case 210 may include a venting hole 211 in the top plate. The venting hole 211 may communicate the inside of the module case 210 with the outside.

The battery module 200 may include a battery cell 220. The battery cell 220 may be accommodated inside the module case 210. The plurality of battery cells 220 may be stacked along the front and rear direction or the X-axis direction. The battery cell 220 may include an accommodation portion 221 having an electrode assembly, a first sealing portion 222 protruding to the left and right sides of the accommodation portion 221, and a second sealing portion 223 protruding upward from the accommodation portion 221. In addition, the battery cell 220 may include an electrode lead 224 protruding to the left and right sides of the first sealing portion 222, respectively. Each battery cell 220 may extend along the right and left direction or the Y-axis direction. The electrode lead 224 may protrude to the left and right sides of each accommodation portion 221.

The battery module 200 may include a pad 250. The pad 250 may be disposed between the plurality of battery cells 220. The pad 250 may be arranged between at least some of the battery cells 220 and/or at the periphery of the stack. For example, the pad 250 may be configured to be arranged between every four battery cells 220 stacked in the front and rear direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The battery module 200 may include a bus bar frame assembly 230. The bus bar frame assembly 230 may be provided at the left and right sides of the plurality of battery cells 220, respectively. The bus bar frame assembly 230 may be electrically connected to the electrode leads 224 of the plurality of battery cells 220.

The battery module 200 may include an end cover 240. The pair of end covers 240 may be coupled to the left and right sides of the module case 210, respectively. The pair of end covers 240 may cover the left and right surfaces of the module case 210. The end covers 240 may have a square shape.

The battery module 200 may be installed, fastened, coupled, fixed or attached to the upper surface of the base plate 110. If a thermal event occurs from the battery module 200, the venting gas VG may be discharged through the venting hole 211. The venting hole 211 may face the inner surface of the pack cover 150. The venting gas VG discharged through the venting hole 211 may push the pack cover 150 outward, upward or in the Z-axis direction.

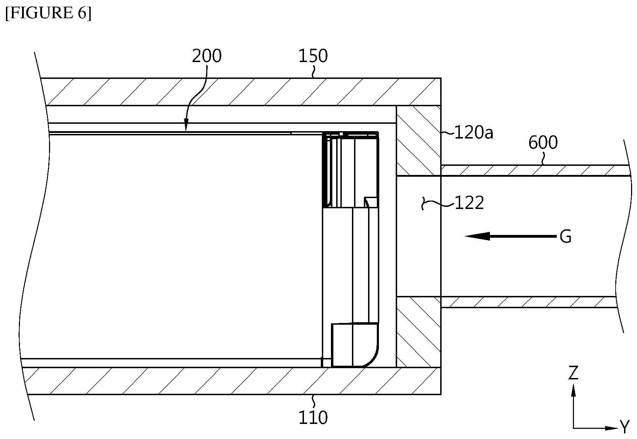

FIG. 6 is a cross-sectional view taken along the line A-A' of FIG. 1. Referring to FIGS. 1, 2, 3, and 6, the battery pack 1000 may include a tubing 600. The tubing 600 may have a meaning that generally calls a tube 600, a hose 600, a conduit 600, a duct 600, and a pipe 600.

The tubing 600 may be installed, fastened, coupled, fixed or attached to the outer surface of the case 100. The tubing 600 may be installed, fastened, coupled, fixed or attached to the first side wall 120a. The tubing 600 may communicate with the inner space of the case 100. The first side wall 120a may have a second supply hole 122. The second supply hole 122 may communicate the inside of the case 100 with the outside. The tubing 600 may communicate with the second supply hole 122.

The tubing 600 may supply the gas G into the case 100. The tubing 600 may exhaust the gas G inside the case 100. For example, the tubing 600 may supply the nitrogen gas G into the case 100. For example, the tubing 600 may exhaust the nitrogen gas G inside the case 100.

The gas G may function as a fire extinguishing agent. If a thermal event occurs, a fire may occur inside the battery pack 1000. By supplying the gas G into the case 100, the fire may be extinguished. This may suppress the propagation of the thermal event.

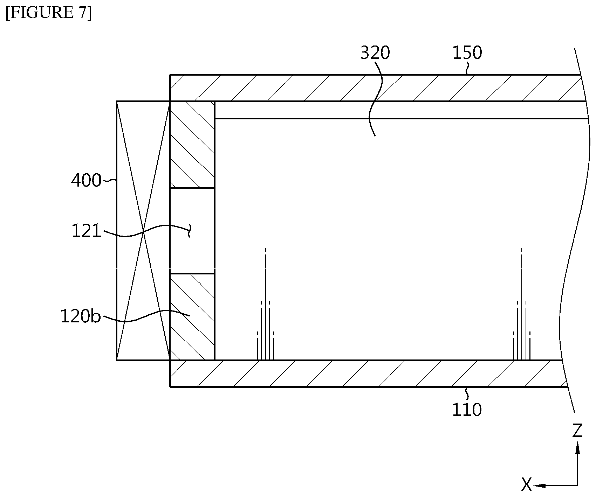

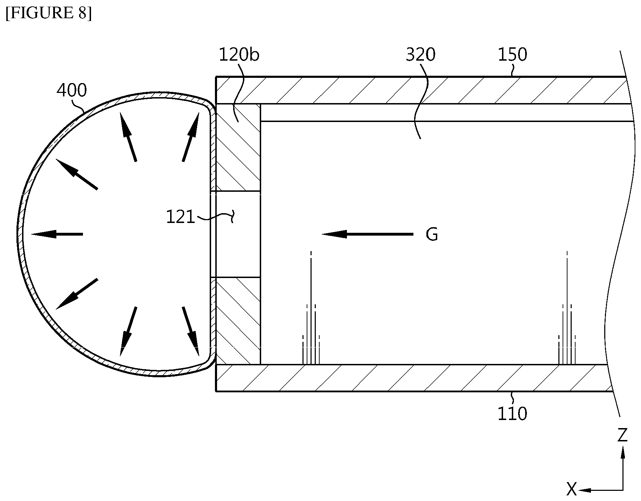

FIG. 7 is a cross-sectional view taken along the line B-B' of FIG. 1. FIG. 8 is a diagram showing the change in FIG. 7 when gas G is supplied.

Referring to FIGS. 1 to 3, 7 and 8, the air bag 400 may be configured to expand as the gas G is supplied therein. The air bag 400 may communicate with the interior of the case 100 through the first supply hole 121. When the gas G is supplied into the case 100, the gas G may flow into the air bag 400 through the first supply hole 121. As the gas G is supplied into the case 100, the air bag 400 may expand. The air bag 400 may alleviate an impact applied to the battery pack 1000.

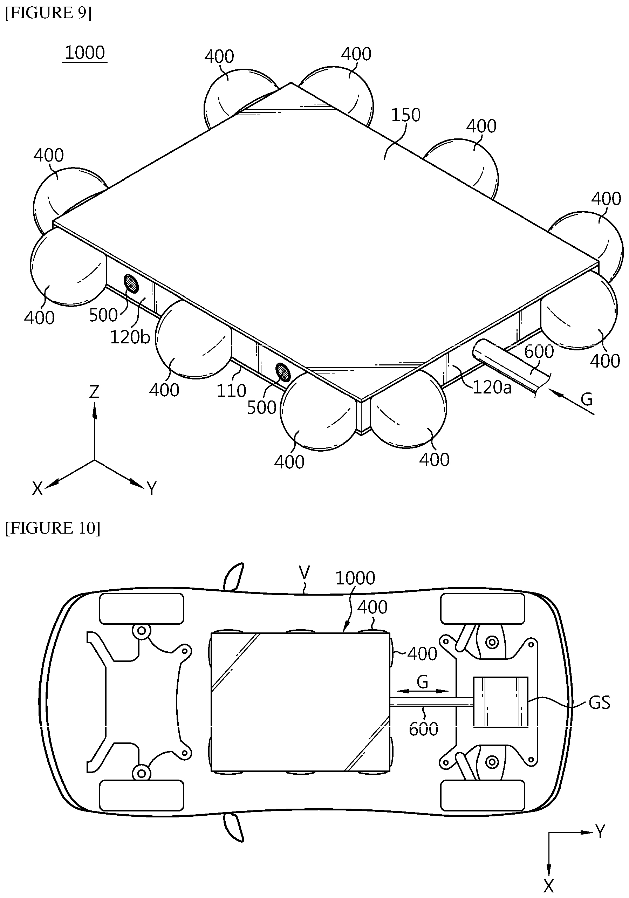

FIG. 9 is a diagram showing the change in FIG. 1 when gas G is supplied. The gas G may be supplied into the case 100 through the tubing 600. As the gas G is supplied into the case 100, the air bag 400 provided in the first side wall 120a may be expanded. As the gas G is supplied into the case 100, the air bag 400 provided in the second side wall 120b may be expanded. As the gas G is supplied into the case 100, the air bag 400 provided in the third side wall 120c may be expanded. As the gas G is supplied into the case 100, the air bag 400 provided in the fourth side wall 120d may be expanded. The air bag 400 may protect the side walls 120a, 120b, 120c, and 120d of the battery pack 1000 as a whole.

FIG. 10 is a drawing showing a vehicle V according to an embodiment of the present disclosure. Referring to FIG. 10, the vehicle V according to the present disclosure may include the battery pack 1000 of the present disclosure. The vehicle V may include a gas supply unit GS. The tubing 600 may be in communication with the gas supply unit GS. The gas supply unit GS may supply the gas G to the battery pack 1000.

The gas supply unit GS may communicate with the air bag that protects the passengers. If an impact greater than a certain level is detected in the vehicle V, the gas supply unit GS may supply the gas G to the air bag 400 and the battery pack 1000 installed in the passenger compartment.

After absorbing the impact or after a certain period of time, the gas G supplied to the battery pack 1000 may be recovered to the gas supply unit GS. The gas G may be transferred to the gas supply unit GS through the tubing 600. After absorbing the impact or after a certain period of time, the gas G supplied to the air bag protecting the passenger may be recovered to the gas supply unit GS.

In addition, the battery pack according to the present disclosure may further include various components, for example components of the battery pack known at the time of filing of this application, such as a BMS, a bus bar, a relay, a current sensor, etc. in addition to the battery module.

The battery pack 1000 according to the present disclosure may be applied to a vehicle V, such as an electric vehicle or a hybrid electric vehicle. The vehicle V according to the present disclosure may further include various other components included in the vehicle V in addition to the battery pack 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case providing a space therein;
a battery cell located inside the case; and
an air bag provided on an outer surface of the case and configured to communicate with the inner space of the case.

2. The battery pack according to claim 1, further comprising:
a tubing coupled to an outer surface of the case and configured to communicate with the inner space of the case.

3. The battery pack according to claim 2,
wherein the case includes:
a base plate; and
a side wall installed on an upper surface of the base plate,
wherein the air bag is provided on the side wall.

4. The battery pack according to claim 3,
wherein the air bag is provided in plurality, and
wherein the plurality of air bags are arranged along a perimeter of the case.

5. The battery pack according to claim 3,
wherein the tubing is coupled to the side wall.

6. The battery pack according to claim 2,
wherein the tubing is configured to supply gas into the case.

7. The battery pack according to claim 6,
wherein the air bag is configured to expand as gas is supplied into the case.

8. A vehicle comprising the battery pack according to any one of claims 1 to 7.

9. A vehicle comprising the battery pack according to any one of claims 2 to 7,
wherein the vehicle further comprises a gas supply unit configured to supply gas, and
wherein the tubing communicates with the gas supply unit.
